# EUROPEAN PATENT APPLICATION

(11) **EP 0 605 873 A1**
(43) Date of publication of application: **13.07.1994**
(21) Application number: 93120941.5
(22) Date of filing: 27.12.1993
(51) Int. Cl.: G06F 9/38

(54) **Method and system for tracking scalar instructions within a superscalar processor system**

(30) Priority: 08.01.1993 US 1866
(71) Applicant: INTERNATIONAL BUSINESS MACHINES CORPORATION, Armonk, N.Y. 10504 (US)
(72) Inventor: Kahle, James Allan, Austin, Texas 78731 (US); Waldecker, Donald Emil, Round Rock, Texas 78681 (US)
(74) Representative: Burt, Roger James, Dr.

(57) **Abstract**

A method for tracking a group of scalar instructions within a superscalar data processor system. A group of unique identification numbers, which is large enough to uniquely identify each scalar instruction currently being executed within the superscalar data processor system, is selected (402). Thereafter, one of the unique identification numbers is associated (406) with each scalar instruction being processed within the superscalar processor system, as each scalar instruction is loaded (404) into the processor's instruction dispatcher. After the execution of a particular scalar instruction has completed (418), the association between the particular scalar instruction and the associated unique identification number is terminated (420), thereby allowing the group of unique identification numbers to be reutilized (422) to track subsequent scalar instruction execution within said superscalar data processor system.

## Description

The present application is related to EP-A Serial No. , entitled "Method and System for Single Cycle Dispatch of Multiple Instructions in a Superscalar Processor System," EP-A Serial No. , "Method and System for Selective Serialization of Instruction Processing in a Superscalar Processor System," EP-A Serial No. , entitled "Method and System for Indexing the Assignment of Intermediate Storage Buffers in a Superscalar Processor System," EP-A Serial No. , entitled "Method and System for Enhanced Instruction Dispatch in a Superscalar Processor System Utilizing Independently Accessed Intermediate Storage," EP-A Serial No. , entitled "Method and System for Nonsequential Instruction Dispatch and Execution in a Superscalar Processor System," all filed of even date herewith by the inventors hereof and assigned to the assignee herein and incorporated by reference herein.

The present invention relates in general to an improved data processing system and in particular to a method and system for tracking the execution of scalar instructions within a superscalar processor system. Still more particularly, the present invention relates to a method and system for recording the application specified sequential order of scalar instructions in a superscalar processor system.

Designers of modern state-of-the-art data processing systems are continually attempting to enhance performance aspects of such systems. One technique for enhancing data processing efficiency is the achievement of short cycle times and a low Cycles-Per-Instruction (CPI) ratio. An example of the application of these techniques to an enhanced data processing system is the International Business Machines Corporation RISC System/6000 (RS/6000) computer. The RS/6000 system is designed to perform well in numerically intensive engineering and scientific applications as well as in multiuser, commercial environments. The RS/6000 processor employs a superscalar implementation, which means that multiple instructions are issued and executed simultaneously.

The simultaneous issuance and execution of multiple instructions requires independent functional units that can execute concurrently with a high instruction bandwidth. The RS/6000 system achieves this by utilizing separate branch, fixed Point and floating point processing units which are pipelined in nature. In view of the pipelined nature of the processors in such systems care must be taken to ensure that a result from a particular instruction which is necessary for execution of a subsequent instruction is obtained prior to dispatching the subsequent instruction. One technique for ensuring that such so-called "data dependency hazards" do not occur is the restriction of the dispatching of a particular instruction until such time as all preceding instructions have been dispatched. While this technique ensures that data dependency hazards will not occur, the performance penalty encountered utilizing this technique is substantial.

As a consequence, modern superscalar data processing systems often utilize a so-called "data dependency interlock circuit." Such circuits contain logic which operates in concert with instruction dispatch circuitry to ensure that an instruction is not dispatched until such time as a result from a preceding instruction which is necessary for correct execution of that instruction has been obtained. The amount of logic required to implement a data dependency interlock circuit is directly proportional to the number of source operands within each instruction. A source operand is a field within an instruction which is utilized to access an operand within a register file, for utilization in execution of that instruction.

While data dependency interlock circuits permit data dependency hazards to be avoided without encountering the substantial performance penalty described above, the design and implementation of data dependency interlock circuits for instructions which include larger numbers of source and destination operands becomes quite complex. The dependency interlocks inhibit dispatch of dependent instructions which prevents following instructions, which may be independent and executable, from entering the dispatcher to be dispatched and executed.

The data dependency hazards which occur with the simultaneous executing of multiple instructions in each processor cycle have also been addressed by utilizing an approach known as "register renaming." Register renaming is a technique utilized to temporarily place the results of a particular instruction into a register for potential use by later instructions prior to the time the final result from an instruction is placed within a register file. Register renaming is generally accomplished by providing a register file array with extra locations and a pointer arrangement to identify particular physical registers which have been assigned to logical registers. Selected prior art approaches also utilize multiple register file arrays to provide many "read" ports for data or for holding previous results for backup in the case of exceptions.

While this technique provides the ability to simultaneously dispatch and execute multiple instructions where serial execution might otherwise be necessary, a problem exists with the dispatching of instructions to execution units utilizing such techniques. The requirement that an instruction utilize particular data or operands for execution has generally rendered it impossible to dispatch an instruction and associated data to an execution unit within a single processor cycle, since the dispatch unit, or the execution unit must generally perform a complex read through a lookup table or pointer system to determine when temporary register contains the required data for execution of the instruction.

Also, as several scalar instructions are loaded into a superscalar processor for simultaneous execution, certain instructions may be dispatched to an available execution unit before an instruction that proceeds the dispatched scalar instructions in an application specified sequential order. Such prior dispatching of a scalar instruction before other scalar instructions which precede the scalar instruction in application specified sequential order may be referred to as "nonsequential".

Nonsequential scalar instruction dispatch and execution provides the capability to optimize the use of execution unit resources within a processor. However, problems may occur as a result of executing certain scalar instructions prior to other instructions, which, according to the author of the software application, should be executed first. For example, if a load instruction is completed before a store instruction to the same location, and the application specifies that the load instruction is to be executed after the store instruction, it is highly probable that the nonsequentially executed load instruction has loaded erroneous data. Therefore, it should be appreciated by those persons skilled in the art that a processor should be able to identify which scalar instructions must be executed in application specified sequential order, and be able to identify when such critical sequences of scalar instructions are not executed in the application specified sequential order.

Another example of a problem which may occur as a result of nonsequential instruction dispatch and execution is the management of scalar instructions within the superscalar processor that are not yet completed upon the occurrence of an exception condition within an execution unit, such as for example, a register overflow or a divide-by-zero math error. When an exception condition occurs, an interrupt may be generated which will invoke an "error handler" portion of the software designed to manage the exception condition. However, before the error handler may be invoked, certain instructions within the processor may have to be completed in order for the error handler to operate in an environment that emulates the environment that would exist had the scalar instructions been executed in application specified sequential order.

In addition to identifying the scalar instructions which must be completed before an error handler is invoked in response to an exception condition, it may not be necessary to complete other scalar instructions, such as for example, particular scalar instructions which have been completed, or which are currently being executed, or which have been assigned to a reservation station associated with an execution unit, or which have been loaded into the instruction dispatcher. To increase the efficiency of the superscalar processor and to optimize the allocation of processor resources, such as execution units, buffers and registers, the execution of unnecessary scalar instructions and the assignment of processor resources to unnecessary scalar instructions should be avoided.

One method of identifying instructions executing within a processor is to utilize the instruction counter associated with the particular instruction. However, there are problems with utilizing the instruction counter for identifying instructions. First, the instruction counter may be comprised of 32 or more bits. Utilizing such a large number of bits to identify a relatively small number of instructions which may be executing within a superscalar processor wastes storage resources. Second, the instruction counter may not uniquely identify instructions executing within the processor if the processor is executing a loop of software instructions. That is, if a loop of software instructions is being executed, there may be more than one scalar instruction executing in the processor that has the same instruction counter number. Therefore, each instruction executing in the processor would not be uniquely identified, which would in turn cause a problem for the section of the processor responsible for allowing certain scalar instructions to complete execution and for canceling other scalar instructions upon the occurrence of specified conditions within the processor.

In addition to failing to uniquely identify executing instructions within the processor, utilizing the instruction counter during a software loop may not accurately associate the application specified sequential order of execution with each instruction. This becomes a problem when an exception condition occurs while the processor is executing a software loop and there are several instructions, which may be the same type of instruction, within the processor utilizing the same instruction counter as identification numbers. When the exception condition occurs, it will be virtually impossible for the processor to emulate the environment within the processor which would have resulted from executing instructions in application specified order.

It should therefore be apparent that a need exist for a method and system which permits the identification of each scalar instruction being executed within a superscalar processor system. Furthermore, it should be apparent that it is sometimes beneficial to have a method and system which permits tracking the location of scalar instructions as such instructions are dispatched to, and completed by, specific execution units, thereby enabling the processor to efficiently locate scalar instructions.

The above drawbacks of the prior art are overcome by the invention as claimed.

It is one object of the present invention to provide an improved data processing system.

It is another object of the present invention to provide an improved method and system for tracking the execution of scalar instructions within a superscalar processor system.

It is yet another object of the present invention to provide an improved method and system for recording the application specified sequential order of scalar instructions within a superscalar processor system.

The foregoing objects are achieved as is now described. The method and system of the present invention provides a method for tracking a group of scalar instructions within a superscalar data processor system which is capable of fetching an application specified ordered sequence of scalar instructions and simultaneously dispatching a group of scalar instructions to a plurality of execution units utilizing an instruction dispatcher. A group of unique identification numbers, which is large enough to uniquely identify each scalar instruction currently being executed within the superscalar data processor system, is selected. Thereafter, one of the unique identification numbers is associated with each scalar instruction being processed within the superscalar processor system, as each scalar instruction is loaded into the processor's instruction dispatcher. After the execution of a particular scalar instruction has completed, the association between the particular scalar instruction and the associated unique identification number is terminated, thereby allowing the group of unique identification numbers to be reutilized to track subsequent scalar instruction execution within said superscalar data processor system.

The above as well as additional objects, features, and advantages of the present invention will become apparent in the following detailed written description.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
**Figure 1** is a high level block diagram of superscalar data processing system which may be utilized to implement the method and system of the present invention;
**Figure 2** is a more detailed block diagram of the instruction dispatch circuitry of the superscalar data processing system of **Figure 1** which may be utilized to implement the method and system of the present invention;
**Figure 3** is a high level block diagram which depicts the utilization of intermediate storage buffers within the superscalar data processing system of **Figure 1** in accordance with the method and system of the present invention;
**Figure 4** is a logic flowchart which depicts the tracking of scalar instructions within a superscalar processor system in accordance with the method and system of the present invention; and
**Figure 5** is a high level block diagram which depicts the restarting of an application specified ordered sequence of instructions in accordance with the method and system of the present invention.

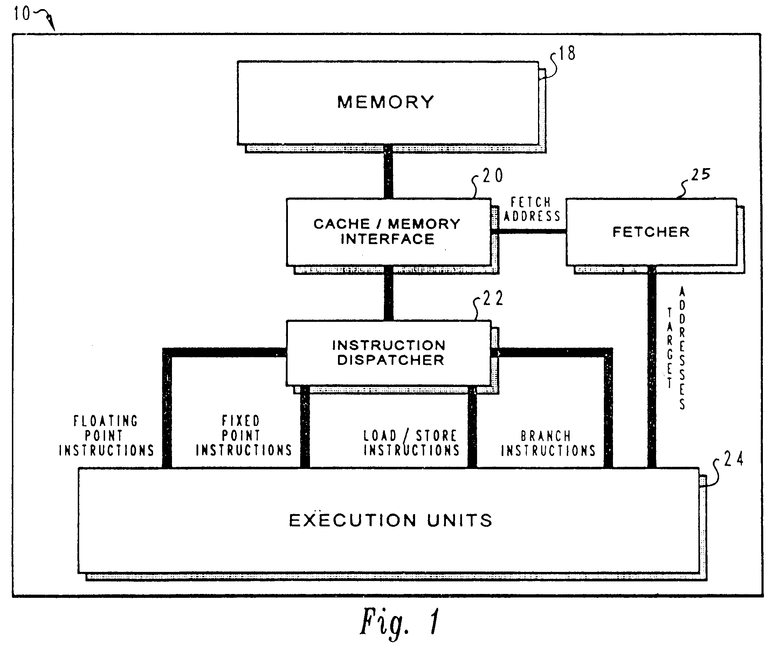

With reference now to the figures and in particular with reference to **Figure 1**, there is depicted a high level block diagram of a superscalar data processing system **10** which may be utilized to implement the method and system of the present invention. As illustrated, data processing system **10** includes a memory **18** which is utilized to store data, instructions and the like. Data or instructions stored within memory **18** are preferably accessed utilizing cache/memory interface **20** in manner well known to those having skill in the art. The sizing and utilization of cache memory systems is a well known subspeciality within the data processing art and is not addressed within the present application. However, those skilled in the art will appreciate that by utilizing modern associative cache techniques, a large percentage of memory accesses may be achieved utilizing data temporarily stored within cache/memory interface **20**.

Instructions from cache/memory interface **20** are typically loaded into instruction dispatcher **22** which preferably includes a plurality of queue positions. In a typical embodiment of a superscalar data processing system each position within the instruction dispatch may include between two and eight instructions and thus, in a given cycle, up to eight instructions may be loaded into instruction dispatcher **22**, depending upon how many valid instructions are passed by cache/memory interface **20** and how much space is available within instruction dispatcher **22**.

As is typical in such superscalar data processing systems, instruction dispatcher **22** is utilized to dispatch instructions to execution units **24**. As depicted within Figure **1**, data processing system **10** may include one or more floating point units, fixed point processor units, load/store units, and a branch processor unit, as a matter of design choice. Thus, instruction dispatcher **22** may dispatch multiple instructions during a single cycle, one to each execution unit. Execution units may include reservation stations which could permit dispatch of more than one instruction to a single execution unit during a single cycle, as a matter of design choice. Thus, multiple execution units in a superscalar processor may each receive multiple instructions in a single cycle. Additionally, in multiprocessor systems instructions may be dispatched to multiple execution units **24** associated with multiple processors. A fetcher **25** calculates fetch addresses for target instructions necessary to follow conditional branches and couples those fetch addresses to cache/memory interface **20**.

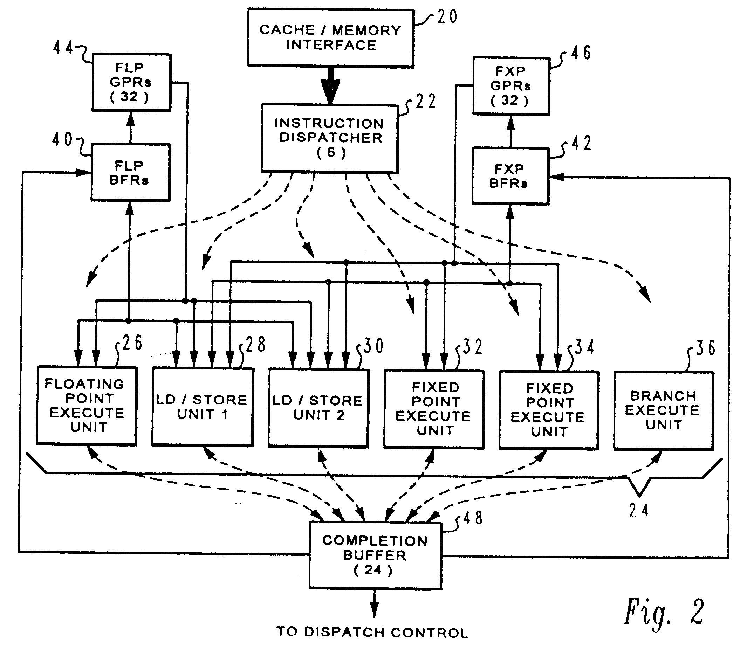

Referring now to **Figure 2**, there is depicted a more detailed block diagram of the instruction dispatch circuitry of the superscalar data processing system of **Figure 1** which may be utilized to implement the method and system of the present invention. As illustrated, instructions from cache/memory interface **20** are typically loaded into instruction dispatcher **22** in groups in an application specified sequential order. Thus, as a matter of design choice, a group of two, four, or eight instructions are loaded from cache/memory interface **20** into instruction dispatcher **22**, for dispatch on an opportunistic basis to one or more execution units within execution units **24**. As depicted in the illustrated embodiment within **Figure 2**, these execution units may include a floating point execution unit **26**, multiple load/store units **28** and **30**, multiple fixed point execution units **32** and **34**, and a branch execution unit **36**. Of course, as discussed above, a greater or lesser number of execution units of different types may be included within data processing system **10** as a matter of design choice.

As is typical in superscalar data processing systems such as the type depicted herein, a plurality of general purpose registers are also provided. In the depicted embodiment within **Figure 2**, two groups of general purpose registers are provided. Floating point general purpose registers **44** and fixed point general purpose registers **46**. Thus, the results of the execution of multiple instructions within the execution units depicted within **Figure 2** are typically stored within a selected general purpose register for future utilization. In accordance with a feature of the present invention, a plurality of intermediate storage buffers are also provided. That is, floating point intermediate storage buffers **40** and fixed point intermediate storage buffers **42**. As will be explained in greater detail herein, each execution unit is connected to each intermediate storage buffer via an independent bus. Thus, data required by an execution unit, or generated by the execution of an instruction within an execution unit, may be placed on an independent bus and stored within a designated intermediate storage buffer for utilization by other execution units or for future transfer to a general purpose register.

In this manner, the maintaining of complex lookup tables typically associated with register renaming scheme is not required and an intermediate storage buffer may be efficiently assigned to be immediately utilized as a storage location for a destination operand, permitting the instruction to be dispatched within a single processor cycle, since data locations do not need to be determined within a renamed register file. Additionally, the execution of instructions in a non-sequential manner may be permitted, with the output of those instructions being temporarily stored within intermediate storage buffers for future assembly within the general purpose registers in the application specified sequential order.

As depicted, the fixed point execution units are each coupled via an independent bus to fixed point intermediate storage buffers **42**, while the floating point execution unit is connected to each floating point intermediate storage buffer **40**, via an independent bus. Load/store units **28** and **30**, as those skilled in the art will appreciate, are necessarily connected to floating point intermediate storage buffers **40** and fixed point intermediate storage buffers **42**, since these units will load and store both fixed point and floating point data.

In accordance with another feature of the present invention a completion buffer **48** is provided. Completion buffer **48** is utilized to track the completion of the multiple scalar instructions which are being executed within execution units **24**. The results of the execution of these instructions, as described above, are each temporarily stored within an associated intermediate storage buffer and, upon an indication that an instruction or a group of instructions have been completed successfully, in an application specified sequential order, completion buffer **48** may be utilized to initiate the transfer of the results of those completed instructions data to the associated general purpose registers. Additionally, in the event an exception condition occurs, completion buffer **48** may be utilized to initiate storage of the results of the execution of any instruction which completed prior to the exception and to control instruction dispatcher **22** to restart the process at the point where the exception condition occurred, permitting corrupted or invalid data to be replaced by a valid output in an efficient manner, or to initiate a new sequence of instructions as specified by the application specific program for specific types of exceptions.

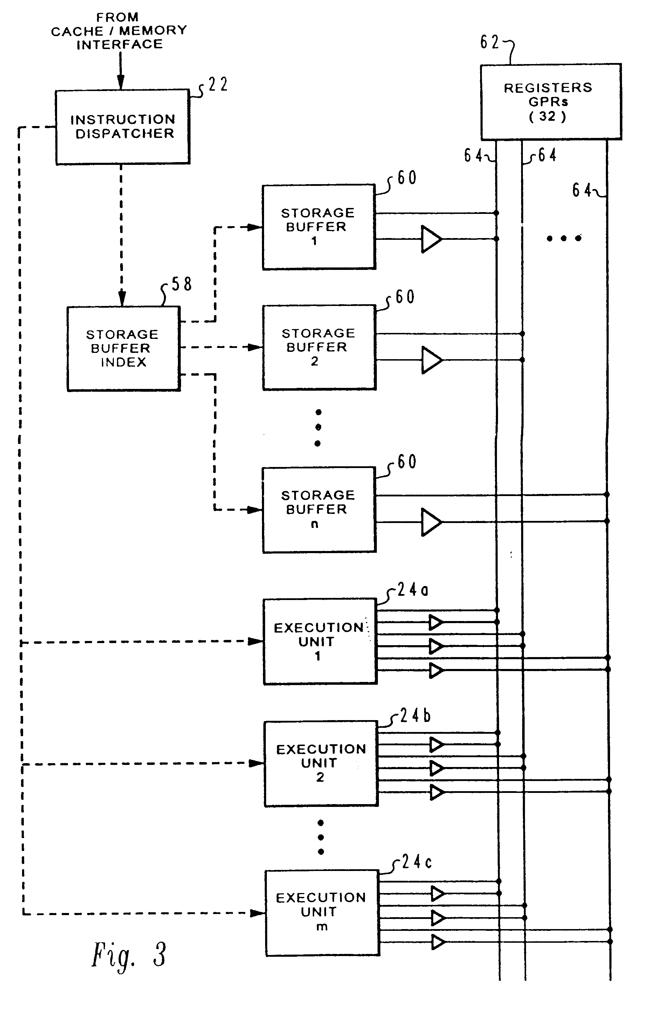

With reference now to **Figure 3**, there is depicted a high level block diagram illustrating the utilization of intermediate storage buffers within the superscalar processor system of **Figure 1**, in accordance with the method and system of the present invention. A storage buffer index **58** is provided which is accessible by instruction dispatcher **22**. As will be described in greater detail herein, storage buffer index **58** is utilized to store and maintain an indication of the relationship between each of a plurality of intermediate storage buffers **60** and a designated general purpose register **62** for utilization during execution of succeeding instructions.

The plurality of intermediate storage buffers **60** are preferably connected to multiple independent buses **64**. In the preferred embodiment, the number of independent buses **64** equals the number of intermediate storage buffers **60**, with each intermediate storage buffer connected to one bus. Each of the intermediate storage buffers **60** may read from and write to a corresponding independent bus **64**. Those skilled in the art will recognize that the number of buses utilized may vary as a matter of design choice.

A plurality of execution units **24a**, **24b**, **24c** are depicted and are coupled to each of the multiple independent buses **64**. In the preferred embodiment, execution units **24a**, **24b**, **24c** may include a floating point execution unit, multiple load/store units, multiple fixed point execution units, and a branch execution unit. However, those skilled in the art will appreciate that the number and type of execution units may vary as a matter of design choice.

Each of the plurality of execution units **24a**, **24b**, **24c** may also read from and write to each of the independent buses **64**. Consequently, each of the plurality of execution units **24a**, **24b**, **24c** are coupled to each of the plurality of intermediate storage buffers **60**, via the multiple independent buses **64**. Thus, when data is generated by the execution of an instruction within an execution unit, the execution unit may place that data on a bus corresponding to a designated intermediate storage buffer which has been specified as a destination for that data, where the data may be temporarily stored. At the same time, the execution unit indicates the data on the bus is valid by setting a "valid" bit to an appropriate state. In this manner, while the data is on the bus, and before or at the same time the data is stored within the designated intermediate storage buffer, any other execution unit which requires that data may retrieve the data from the bus. Thus, one advantage of the provision of independent buses is the elimination of the need to store the data in a buffer and then thereafter access that data from the buffer. The ability to retrieve data directly from the bus will significantly increase the operation speed of the processor system.

Still referring to **Figure 3**, it may be seen that multiple independent buses **64** are each coupled to general purpose registers **62**. When an instruction is to be dispatched to an execution unit, the relationship between the designated intermediate storage buffer and the selected general purpose register is preferably stored within the storage buffer index **58**. When the results of execution are needed by another execution unit, the transfer of those results may be performed utilizing the information within storage buffer index **58**. As will be discussed in greater detail herein, the information stored within storage buffer index **58** may be an identifier for the designated intermediate storage buffer which is accessed utilizing the general purpose register identification or an identifier of a general purpose register which is accessed with the identification of the designated intermediate storage buffer.

In this manner, the maintenance of complex lookup tables typically associated with a register renaming scheme is not required, since an intermediate storage buffer may be immediately assigned as a storage location for each destination operand within an instruction to be dispatched, without requiring the renaming of a general purpose register file. Furthermore, storage buffer index **58** permits the execution of instructions in a non-sequential manner, since the results of execution of each instruction are temporarily stored in intermediate storage buffers **60**, and may be subsequently utilized by a succeeding instruction by utilizing the information within storage buffer index **58** and the content of completion buffer **48** (see **Figure 2**).

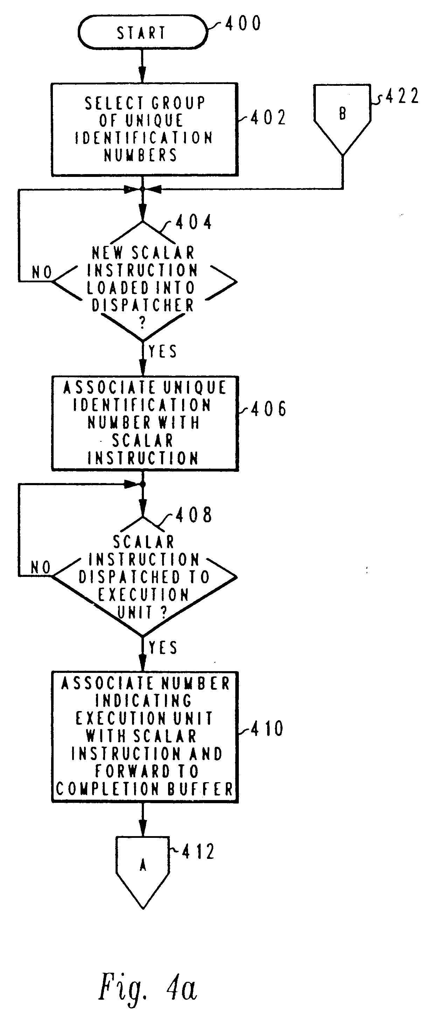

Referring now to **Figure 4a**, there is depicted a logic flowchart illustrating a method of tracking a group of scalar instructions within a superscalar processor system in accordance with the method and system of the present invention. As depicted, the process begins at block **400** and thereafter passes to block **402**. Block **402** illustrates the selection of a group of unique identification numbers which will be utilized to identify scalar instructions as such instructions are executed within the superscalar data processing system. Since the number of instructions that are being currently processed within the superscalar processor system is relatively small compared with the number of instructions in a typical application program, the number of unique identification numbers selected need only be large enough to associate a unique identification number with each scalar instruction currently being processed at any location within the superscalar data processor system. Therefore, if 64 scalar instructions may be in process at any particular time, as few as 6 data bits may comprise a unique identification number which identifies each scalar instruction processing within the superscalar processor system.

Next, the process determines whether or not a new scalar instruction has been loaded into the instruction dispatcher, as depicted at decision block **404**. If not, the process iterates until such time as a scalar instruction is loaded into the instruction dispatcher. If a new scalar instruction has been loaded into the instruction dispatcher, the process associates a unique identification number with the loaded scalar instruction, as illustrated at block **406**. In order to indicate the application specified sequential order of the scalar instructions loaded into the instruction dispatcher, the group of unique identification numbers are preferably sequentially associated with the scalar instructions as those instructions are loaded into the instruction dispatcher.

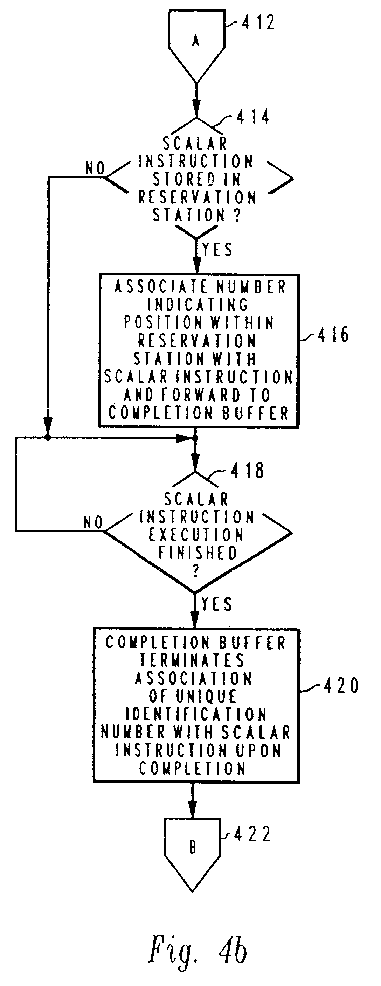

Next, as depicted at decision block **408**, the process iterates until such time as the scalar instruction is dispatched to an execution unit. If the scalar instruction has been dispatched to an execution unit, the process associates a number with the dispatched scalar instruction that indicates the particular execution unit to which the scalar instruction was dispatched, as illustrated at block **410** and then forwards that identification number and execution unit identifier to completion buffer **48** (see **Figure 2**). Thereafter, the process passes via off page connector **A**, as depicted at reference numeral **412**, to block **414** of **Figure 4b**.

Referring now to block **414** of **Figure 4b**, the process next determines whether or not the recently dispatched scalar instruction is stored in a reservation station associated with a particular execution unit. If the scalar instruction was stored within a reservation station, the process associates a number with the scalar instruction that indicates the position within the reservation station, as depicted at block **416** and forwards that information to completion buffer **48** (see **Figure 2**). If the scalar instruction was not stored in a reservation station, the process passes to decision block **418**, which illustrates the determination of whether or not the execution of the scalar instruction has completed. If not, the process iterates until such time as the scalar instruction execution is complete.

If the scalar instruction execution has been completed, the process then terminates the association of the unique identification number with the completed scalar instruction, as depicted at block **420**. As the association of the unique identification number with the scalar instruction is terminated, the unique identification number becomes available for association with a new scalar instruction which may be loaded into the instruction dispatcher, as depicted at connector **B**, at reference numeral **422** which illustrates the return of the process in an iterative fashion to block **404**.

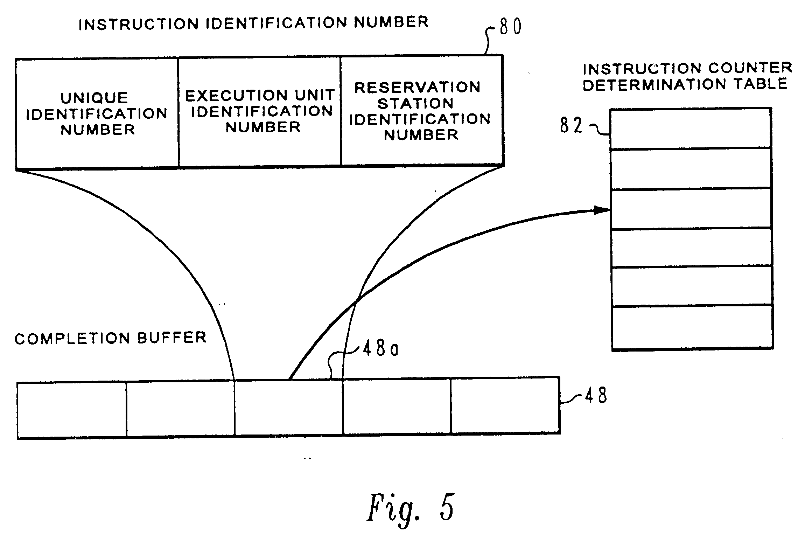

With reference now to **Figure 5**, there is depicted a high level block diagram which illustrates the restarting of an application specified ordered sequence of instructions utilizing the method and system of the present invention. As illustrated, each instruction which has been dispatched within the superscalar processor system is indicated within completion buffer **48**. Thus, slot **48a** is utilized to indicate the dispatching of a selected instruction within the superscalar processor system. As described with respect to the flowchart of **Figures 4a** and **4b**, a unique identification is associated with that instruction along with an execution unit identification and a reservation station position identifier. These identifying indicators are depicted schematically at reference numeral **80**.

Utilizing these identifying indicators in the event an exception condition occurs, as described above, with respect to an instruction associated with a particular slot within completion buffer **48**, the unique identifiers associated with that instruction may be utilized to access instruction counter determination table **82** and determine the instruction counter associated with that instruction so that the application specified ordered sequence of instructions may be restarted from the correct position.

## Claims

1. A method for tracking a group of scalar instructions within a superscalar processor system (10) which is capable of fetching an application specified ordered sequence of scalar instructions and simultaneously dispatching a group of said scalar instructions to a plurality of execution units (24) utilizing an instruction dispatcher (22), said method comprising the steps of:
selecting (402) a group of unique identification numbers;
associating (406) one of said group of unique identification numbers with each scalar instruction being processed within said superscalar processor system (10), in response to each of said scalar instructions being loaded (404) into said instruction dispatcher (22); and
terminating (420) an association between a particular scalar instruction and said associated one of said group of unique identification numbers in response to a completion (418) of execution of said particular scalar instruction, wherein said group of unique identification numbers may be reutilized (422) to track subsequent scalar instruction execution within said superscalar processor system.

2. The method of tracking a group of scalar instructions within a superscalar processor system (10) according to Claim 1, wherein said step of selecting (402) a group of unique identification numbers comprises the step of selecting a group of six bit digital unique identification numbers.

3. The method of tracking a group of scalar instructions within a superscalar processor system (10) according to Claim 1 or 2, further including the step of associating (410) an indicator with each scalar instruction which is dispatched to a selected one of said plurality of execution units (24) which uniquely identifies said selected one of said plurality of execution units (24).

4. The method of tracking a group of scalar instructions within a superscalar processor system (10) according to Claim 3, further including the step of associating (416) a second indicator with each scalar instruction stored within a reservation station within one of said plurality of execution units (24) indicative of a storage location within said reservation station.

5. The method of tracking a group of scalar instructions within a superscalar processor system (10) according to any Claim from 1 to 4, further including the step of utilizing a unique identification number (80) associated with a particular instruction to restart said application specified ordered sequence of instructions in response to an exception condition with respect to said particular instruction.

6. A system for tracking a group of scalar instructions within a superscalar processor system (10) which is capable of fetching an application specified ordered sequence of scalar instructions and simultaneously dispatching a group of said scalar instructions to a plurality of execution units (24) utilizing an instruction dispatcher (22), said system comprising:
a group of unique identification numbers;
means for associating (406) one of said group of unique identification numbers with each scalar instruction being processed within said superscalar processor system (10), in response to each of said scalar instructions being loaded (404) into said instruction dispatcher (22); and
means for terminating (420) an association between a particular scalar instruction and said associated one of said group of unique identification numbers in response to a completion (418) of execution of said particular scalar instruction, wherein said group of unique identification numbers may be reutilized (422) to track subsequent scalar instruction execution within said superscalar processor system.

7. The system of tracking a group of scalar instructions within a superscalar processor system (10) according to Claim 6, wherein said group of unique identification numbers comprises a group of six bit digital unique identification numbers.

8. The system of tracking a group of scalar instructions within a superscalar processor system (10) according to Claim 6 or 7, further including means for associating (410) an indicator with each scalar instruction which is dispatched to a selected one of said plurality of execution units (24) which uniquely identifies said selected one of said plurality of execution units (24).

9. The system of tracking a group of scalar instructions within a superscalar processor system (10) according to Claim 8, further including means for associating (416) a second indicator with each scalar instruction stored within a reservation station within one of said plurality of execution units (24) indicative of a storage location within said reservation station.

10. The system of tracking a group of scalar instructions within a superscalar processor system (10) according to any Claim from 6 to 9, further including means for utilizing a unique identification number (80) associated with a particular instruction to restart said application specified ordered sequence of instructions in response to an exception condition with respect to said particular instruction.
